(19) Europäisches Patentamt
European Patent Office
Office européen des brevets

(11) EP 3 570 241 A1

(12) **EUROPEAN PATENT APPLICATION**
published in accordance with Art. 153(4) EPC

(43) Date of publication:
20.11.2019 Bulletin 2019/47

(51) Int Cl.:
*G06Q 30/02* (2012.01)    *H04N 17/00* (2006.01)
*H04N 21/262* (2011.01)

(21) Application number: 18739375.6

(22) Date of filing: 09.01.2018

(86) International application number:
PCT/JP2018/000215

(87) International publication number:
WO 2018/131576 (19.07.2018 Gazette 2018/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 10.01.2017 JP 2017002006

(71) Applicant: Dentsu Inc.
Tokyo 105-7001 (JP)

(72) Inventor: KISHIMOTO, Wataru
Tokyo 105-7001 (JP)

(74) Representative: SSM Sandmair
Patentanwälte Rechtsanwalt
Partnerschaft mbB
Joseph-Wild-Straße 20
81829 München (DE)

(54) **ADVERTISEMENT SLOT OPTIMIZATION SYSTEM AND ADVERTISEMENT SLOT OPTIMIZATION METHOD IN BROADCAST MEDIA SUCH AS TELEVISION**

(57) Provided is an advertisement space optimization system and an advertisement space optimization method for optimizing an advertisement space in a broadcast medium such as television by predicting with high accuracy the media audience rating by television viewers and the like. The advertisement space optimization system for optimizing an advertisement space broadcast on a broadcast medium according to the present invention includes a system for high-advanced rating estimate (SHARE) and a target actual optimization system (TAOS). The SHARE is configured to predict a target audience rating with an accuracy higher than a predetermined accuracy and/or receive an input of rating rate data measured in real time by a third party organization, and transmit predicted audience rating data for an advertisement space and/or audience rating data immediately before broadcast to the TAOS. The TAOS is configured to receive from the SHARE the predicted audience rating of an advertisement to be broadcast and/or audience rating data of the advertisement immediately before on air (OA), reallocate arrangement of a material for an advertisement space based on third data obtained by evaluating a difference between first data and second data for each advertisement space, and transmit a specification of the reallocated material for each advertisement space.

FIG. 1

**Description**

[Technical Field]

The present invention relates to an advertisement space optimization system and advertisement space optimization method for optimizing an advertisement space broadcast on a broadcast medium such as television.

[Background Art]

An outline of the transaction of an advertisement space (hereinafter sometimes referred to as a commercial space) conventionally performed on a broadcast medium such as television will be described. Broadcast media includes television including terrestrial television and satellite television, radio, the Internet, wireless communication, a broadcasting method using a loudspeaker or the like, and other broadcasting means.

First, advertisers and advertising agencies perform media planning according to advertising budget. The method of implementation depends on the advertiser. One example is to determine the size of a television advertisement investment out of the entire advertisement budget, and to determine the district allocation of the television advertisement budget and the broadcasting station allocation of the supplier. In addition, a determination is also made as to commercial arrangement conditions, such as what program the TV commercial will be on air (hereinafter sometimes referred to as OA) in what time slot.

The advertiser and the advertising agency requested by the advertiser perform the "planning" for the advertisement (hereinafter sometimes referred to as commercial) based on the allocated budget. Based on this "planning", the advertising agency informs each broadcasting station of the period, budget, commercial arrangement conditions, etc. to place an order, so that a specific "draft" is performed to specify what time or time slot, day, month, and year the commercial will be broadcast, as well as what sort of commercial will be broadcast. The term "draft" refers to the act of performing the arrangement of a commercial advertisement space to be broadcast, or the entire space after the arrangement of the space (= broadcast schedule).

When such a specific "draft" is performed, for example, "audience rating data" issued by Video Research Ltd. and other such companies is used. That is, "the past audience rating" is used as an index for estimating the amount of exposure of the commercial space and the advertisement value in the future. After that, confirmation and modification of the "draft" are conducted with the advertiser and the broadcasting station several times, and a final "OA commercial space" will be then determined.

However, after the commercial is actually broadcast, a gap (difference) always occurs between "the audience rating at the time of purchase" and the "Actual" ("the audience rating actually acquired by the commercial").

Therefore, conventionally, advertisers and advertising agencies have carried out management, mainly in the above process, in an effort to improve the Actual, taking into account what "past audience rating" data is used for buying (to buy/purchase) a commercial broadcasting station space. This applies not only to terrestrial television advertisements, but also to satellite television advertisements, radio advertisements, advertisements in broadcasts over the Internet, and advertisements using other broadcast media.

[Summary of Invention]

[Technical Problem]

However, in the conventional method described above, since the data that is the basis of future prediction is a simple average of the past four weeks, there is a problem that the material allocation does not reflect the actual OA situation, such as the program contents on the day of "On-Air" (OA: broadcasting), composition of different channels, entertainers to appear, weather, temperature, thereby preventing the "Actual down" (a gap (difference) between the actually acquired audience rating and the predicted audience rating) from being minimized or being completely avoided.

The present invention has been made in view of the above-described conventional technical problems, and an object thereof is to provide an advertisement space optimization system and an advertisement space optimization method for optimizing an advertisement space in a broadcast medium such as television by predicting with high accuracy the media audience rating, in particular, the audience rating in an advertisement space by television viewers, and/or by referring to audience rating data immediately before broadcast. It is noted that "immediately before broadcast" refers to the timing when it is several seconds to several tens of minutes before broadcast.

[Solution to Problem]

The above-described object of the present invention is achieved by an advertisement space optimization system for optimizing an advertisement space broadcast on a broadcast medium such as television, the advertisement space optimization system including a system for high-advanced rating estimate (SHARE) and a target actual optimization system (TAOS), wherein the SHARE is configured to predict a target audience rating with an accuracy higher than a predetermined accuracy and/or receive an input of audience rating data measured in real time by a third party organization, and transmit predicted audience rating data for an advertisement space and/or audience rating data immediately before broadcast to the TAOS, and the TAOS is configured to receive from the SHARE the predicted audience rating of an advertisement to be broadcast and/or audience rating data of the advertisement immediately before on air (OA), reallocate arrangement of a material for an advertisement space based on third data obtained by evaluating a difference between first data and second data for each advertisement space, and transmit a specification of the reallocated material for each advertisement space.

The advertisement space optimization system of the present invention described above may further include constantly optimum relocation equipment (CORE), wherein the CORE is configured to directly receive the specification of the reallocated material for each advertisement space from the TAOS, and broadcast an advertisement for which each space material is adapted to each corresponding advertisement space based on the specification of the reallocated material for each advertisement space.

Further, the above-described object of the present invention is achieved by an advertisement space optimization system for optimizing an advertisement space broadcast on a broadcast medium such as television, the advertisement space optimization system including a system for high-advanced rating estimate configured to include a data input unit configured to receive an input of data and/or data source information, an explanatory variable conversion unit connected to the data input unit and/or configured to perform specific processing on the data source information received from the data input unit to convert the data source information into an explanatory variable, a program implementation and execution unit connected to the data input unit and the explanatory variable conversion unit and/or configured to implement a program of a predetermined algorithm, and a data output unit connected to the program implementation and execution unit and/or configured to output a result obtained by the implementation and execution unit, wherein the program implementation and execution unit executes the algorithm of the implemented program by using the data received from the data input unit and/or the data source information and by using the explanatory variable obtained by the explanatory variable conversion in the explanatory variable conversion unit, outputs predicted audience rating data obtained by the execution of the algorithm from the output unit, and optimizes an advertisement space based on the output predicted audience rating data.

In the advertisement space optimization system of the present invention described above, the system for high-advanced rating estimate may be configured to handle big data including metadata indicating a detailed genre and category of media, panel data surveyed by a research company (third party organization), access data to a program guide indicating an expected value of media, text data on an SNS or search information from a search site, weather forecast, and the like, and the system for high-advanced rating estimate may be further configured to set an external factor, a composition factor, and a content factor as the explanatory variable by combining a cloud platform capable of processing the big data at high speed, an analysis method of deep learning that improves accuracy by self-learning using various variables, and the like, and predict a media audience rating taking into account factors that are able to affect the media audience rating.

The advertisement space optimization system according to the present invention described above may further include a target actual optimization system configured to include a first input unit configured to receive an input of first commercial space draft data including information such as a reference past audience rating and a buying cost, a second input unit connected to the system for high-advanced rating estimate to receive an input of second commercial space draft data including information such as a predicted audience rating and/or a real-time audience rating, and a data processing unit connected to the first input unit and the second input unit and/or configured to include a reallocation program, and generate and output target actual optimization data by using the reallocation program, based on the first commercial space draft data received by the first input unit and the second commercial space draft data received by the second input unit, wherein the data processing unit evaluates a difference between the first commercial space draft data and the second commercial space draft data for each advertisement space by using the reallocation program, reallocates arrangement of a material for the advertisement space based on third commercial space draft data obtained as a result of the difference, and outputs target actual optimization data indicating a specification of the reallocated material for each advertisement space. The advertisement space optimization system may further include the target actual optimization system configured to include an instruction output unit connected to the data processing unit to receive an input of the target actual optimization data output from the data processing unit and output the target actual optimization data.

The advertisement space optimization system of the present invention described above may further include constantly optimum relocation equipment configured to directly receive the specification of the reallocated material for each advertisement space from the target actual optimization system, and broadcast an advertisement for which each space material is adapted to each corresponding advertisement space based on the specification of the reallocated material for each advertisement space.

Further, the above-described object of the present invention is achieved by a method of optimizing an advertisement space broadcast on a broadcast medium such as television by using an advertisement space optimization system that includes a system for high-advanced rating estimate (SHARE), a target actual optimization system (TAOS), and constantly optimum relocation equipment (CORE), the method including a step of, by the SHARE, predicting a target audience rating with an accuracy higher than a predetermined accuracy and/or receiving an input of audience rating data measured in real time by a third party organization, and transmitting predicted audience rating data for an advertisement space and/or audience rating data immediately before broadcast to the TAOS; a step of, by the TAOS, receiving from the SHARE the predicted audience rating of an advertisement to be broadcast and/or audience rating data of the advertisement immediately before on air (OA), reallocating arrangement of a material for an advertisement space based on third data obtained by evaluating a difference between first data and second data for each advertisement space, and directly transmitting a specification of the reallocated material for each advertisement space to the CORE; and a step of, by the CORE, directly receiving the specification of the reallocated material for each advertisement space from the TAOS, and broadcasting an advertisement for which each space material is adapted to each corresponding advertisement space based on the specification of the reallocated material for each advertisement space.

Further, the above-described object of the present invention is achieved by a method of optimizing an advertisement space broadcast on a broadcast medium such as television, the method including a step of receiving an input of data and/or data source information, a step of performing specific processing on the received data source information to convert the data source information into an explanatory variable, a step of implementing a program of a predetermined algorithm, and a step of outputting a result obtained by the implemented program, wherein the algorithm of the implemented program is executed by using the data and/or the data source information and by using the explanatory variable obtained by the explanatory variable conversion, predicted audience rating data obtained by the execution of the algorithm is output, and an advertisement space is optimized based on the output predicted audience rating data.

The advertisement space optimization method of the present invention described above may further include a step of handling big data including metadata indicating a detailed genre and category of media, panel data surveyed by a research company, access data to a program guide indicating an expected value of media, text data on an SNS, search information from a search site, weather forecast, and the like, and a step of setting an external factor, a composition factor, and a content factor as the explanatory variable by combining a cloud platform capable of processing the big data at high speed, an analysis method of deep learning that improves accuracy by self-learning using various variables, and the like, and predicting an audience rating taking into account all factors that are able to affect the audience rating.

The advertisement space optimization method according to the present invention described above may further include a first input step of receiving an input of first commercial space draft data including information such as a reference past audience rating and a buying cost, a second input step of being connected to the system for high-advanced rating estimate to receive an input of second commercial space draft data including information such as a predicted audience rating and/or a real-time audience rating, and a data processing step of generating and outputting target actual optimization data by using a reallocation program, based on the first commercial space draft data received at the first input step and the second commercial space draft data received at the second input step, wherein the data processing step includes evaluating a difference between the first commercial space draft data and the second commercial space draft data for each advertisement space by using the reallocation program, reallocating arrangement of a material for the advertisement space based on third commercial space draft data obtained as a result of the difference, and outputting target actual optimization data indicating a specification of the reallocated material for each advertisement space. The advertisement space optimization method may further include a step of receiving an input of the target actual optimization data output at the data processing step, and outputting the target actual optimization data.

The advertisement space optimization method of the present invention described above may further include a step of directly receiving the specification of the reallocated material for each advertisement space from a target actual optimization system, and broadcasting an advertisement for which each space material is adapted to each corresponding advertisement space based on the specification of the reallocated material for each advertisement space.

[Advantageous Effects of Invention]

It is possible to replace the space of "0.0%" which frequently appears in an individual Actual with another individual actual material, and implementing the advertisement space optimization system according to the present invention provides an expectation of improvement in the achievement efficiency of advertising effectiveness by around 3% to 6%. This is assumed to result in a very large amount of money equivalent to the level of efficiency improvement, considering the size of the annual amount of money invested in TV commercials.

In addition, if the scope of application of the replacement source space is expanded (= replacement being also performed for a space with an audience rating of 0.1% or more), the amount of the achieved efficiency improvement of advertising effect and the amount of money equivalent to the efficiency improvement are expected to further increase significantly.

[Brief Description of Drawings]

Fig. 1 is a schematic block diagram illustrating a configuration of an embodiment of an advertisement space optimization system according to the present invention.

Fig. 2 is a schematic block diagram illustrating a configuration of an embodiment of a system for high-advanced rating estimate (SHARE) which serves as a part of the advertisement space optimization system illustrated in Fig. 1.

Fig. 3 is an explanatory diagram of a "random forest" adopted for the SHARE illustrated in Fig. 2.

Fig. 4 is a schematic block diagram illustrating a structure of a "prediction model" generated by the "random forest" adopted in the SHARE illustrated in Fig. 2.

Fig. 5 is an explanatory diagram illustrating a comparison between a result of the "random forest" adopted in the SHARE illustrated in Fig. 2 and a result of "multiple regression analysis" adopted conventionally.

Fig. 6 is a schematic block diagram illustrating a configuration of an embodiment of a target actual optimization system (TAOS) which serves as a part of the advertisement space optimization system illustrated in Fig. 1.

Fig. 7 is a flow diagram for describing an operation in the embodiment of the TAOS illustrated in Fig. 6.

Fig. 8 is a flow diagram for describing an operation in another embodiment of the TAOS illustrated in Fig. 6.

[Description of Embodiment(s)]

Hereinafter, an advertisement space optimization system and an optimization method on a broadcast medium such as television according to the present invention will be described with reference to the drawings.

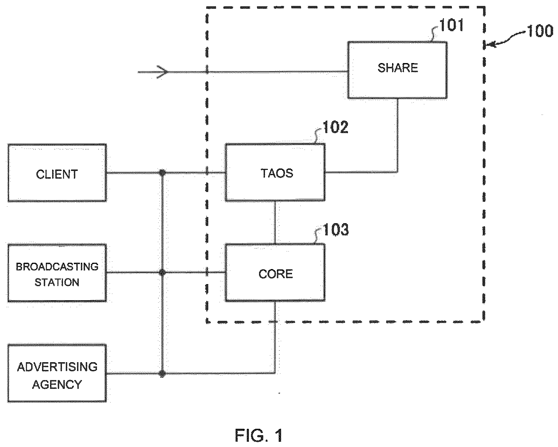

Fig. 1 is a schematic block diagram illustrating an embodiment of an advertisement space optimization system on a broadcast medium such as television according to the present invention.

As illustrated in Fig. 1, an advertisement space optimization system 100 according to the present embodiment includes a system for high-advanced rating estimate (hereinafter referred to as SHARE) 101, a target actual optimization system (hereinafter referred to as TAOS) 102, and constantly optimum relocation equipment (hereinafter referred to as CORE) 103. The SHARE 101 is configured to predict a target audience rating with an accuracy higher than a predetermined accuracy and/or obtain audience rating data measured in real time by a third party organization, and transmit predicted audience rating for an advertisement (commercial) space and audience rating data immediately before broadcast to the TAOS 102. The TAOS 102 is configured to receive from the SHARE 101 the predicted audience rating of an advertisement to be broadcast and/or audience rating data of the advertisement immediately before on air (OA), reallocate arrangement of a material for an advertisement space based on third data obtained by evaluating a difference between first data and second data for each advertisement space, and directly transmit a specification of the reallocated material for each advertisement space to the CORE 103. The CORE 103 is configured to directly receive the specification of the reallocated material for each advertisement space from the TAOS 102, and broadcast an advertisement (commercial) for which each space material is adapted to each corresponding advertisement space based on a specification of the reallocated material for each advertisement space.

Next, the configuration of each of the above-described SHARE 101, TAOS 102, and CORE 103 will be described in detail.

The SHARE 101 is configured to be able to predict a television "viewer's advertisement rating" with high accuracy by using a new analysis method of handling big data.

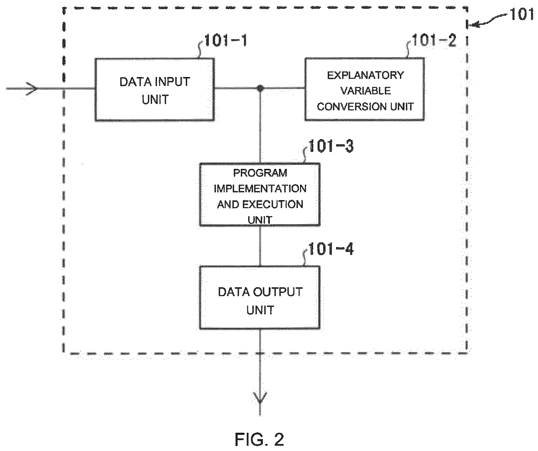

Fig. 2 is a schematic block diagram illustrating a configuration of an embodiment of the system for high-advanced rating estimate (SHARE) which serves as a part of the advertisement space optimization system illustrated in Fig. 1.

The configuration of an example of the SHARE 101 will be described below with reference to Fig. 2.

The SHARE 101 of the present example is configured to include:

a data input unit 101-1 serving as a data input means for receiving an input of data and/or data source information;

an explanatory variable conversion unit 101-2 serving as an explanatory variable conversion means connected to the data input unit 101-1, and/or configured to perform specific processing on the data source information received from the data input unit 101-1 to convert the data source information into an explanatory variable;

a program implementation and execution unit 101-3 serving as a program implementation and execution means connected to the data input unit 101-1 and the explanatory variable conversion unit 101-2 and/or configured to implement a program of a predetermined algorithm; and

a data output unit 101-4 serving as a data output means connected to the program implementation and execution unit 101-3 and/or configured to output a result obtained by the implementation and execution unit 101-3.

The program implementation and execution unit 101-3 is configured to execute the algorithm of the implemented program by using the data received from the data input unit 101-1 and/or the data source information and by using the explanatory variable obtained by the explanatory variable conversion in the explanatory variable conversion unit 101-2, output predicted audience rating data obtained by the execution of the algorithm from the output unit 101-4, and optimize an advertisement space based on the output predicted audience rating data.

The "data source information" of the "data and/or the data source information" used by the program implementation and execution unit 101-3 is processed in advance by the explanatory variable conversion unit 101-2 and is then converted into an explanatory variable in order to perform analytical prediction with increased accuracy.

A method of generating an explanatory variable as well as the data source information used in the SHARE 101 will be described below.

The data source information used in the SHARE 101 includes the following data:

I. Data source information

I-1 VR audience data

Audience rating data aggregated from survey panel data extracted by Video Research Ltd. using random sampling. The household audience rating refers to the percentage of the number of households with one or more TVs turned on out of the total number of survey panel households. On the other hand, the individual audience rating refers to the percentage of the number of people watching TV out of the total number of individual targets living in the survey panel households (e.g. assuming that there were 100 males aged 20 to 34 years old, if there were 20 males aged 20 to 34 years old who had turned on the TV among them, the individual audience rating for target males aged 20 to 34 years would be 20%). In the Kanto, Kansai, and Chubu areas, the VR audience rating is measured by a device dedicated to the audience rating survey called People Meter installed in the survey panel households.

1-2 VR program information

A database, created by Video Research Ltd., including program names, broadcast minutes, broadcast start times, broadcast dates, broadcasting station names, etc. after the end of OA.

1-3 TV metadata

A database, created by WireAction Inc., including companies, products, shops, music, casts, etc. which were introduced in the program and recorded therein through a unique input interface after TV broadcast OA. Details are as follows.

1-4 EPG program information

Broadcasting station official program information. Information provided by IPG, Inc. (Interactive Program Guide), which directly acquires program-related information from broadcasting stations all over the country and centrally manages the resulting data. Specifically, it includes program name, broadcast date and time, program summary, program details, genre, channel identification ID, program identification ID, etc.

1-5 The number of times EPG (Electronic Program Guide) has been previously browsed

When the EPG electronic program guide is browsed on a home page on a personal computer or browsed on an application on a portable smart phone, the entire electronic program guide (= time table) can be browsed at the initial display stage. It is then possible to browse the details of each program content by selecting (clicking etc.) the individual field for the program. The number obtained by calculating the total amount of times the program-specific detail page has been accessed before the program is broadcast is the number of times EPG has been previously browsed.

Next, a method of generating an "explanatory variable" used in the SHARE 101 will be described.

II. Method of generating an explanatory variable

The definition of each explanatory variable and a method of generating an explanatory variable will be described below. However, it is noted that any names for the explanatory variables described herein have been arbitrarily set.

II-1 <Program broadcasting space factor>

II-1-1 Program broadcast week

Overview: Sequential numbers from 1st January to 7th January as the first week

II-1-2 Average over previous four weeks

Overview: An average of household audience ratings at that time over the previous four weeks

Processing:

1. Generate a data set for 4 weeks starting from the broadcast start time, limited to the same broadcasting station
2. Acquire the same time one to four weeks before the start time and the end time of the corresponding program in the form of unix time

(Example) start unix time n weeks before = start unix time of the corresponding program - 3600 x 24 x 7 x n
3. Compare the broadcast start and end times in the data set generated in above 1. with the times calculated in above 2.
4. Calculate the average of the audience ratings of the data extracted in above 3.

II-1-3 Average for different channel space over the previous four weeks

Overview: An average for a different channel space from the corresponding program over the previous four weeks

Processing: Generate a data set limited to another station, and then calculate the average of the audience ratings in the same way as in the audience rating of the previous four weeks.

II-1-4 Average for previous space over previous four weeks

Overview: An average for the program immediately before the corresponding program over the previous four weeks

Processing: Calculate the average of the audience ratings for the program in which the broadcast start time of the corresponding space = the broadcast end time of the space immediately before (previous space) of the same broadcasting station in the same way as in the audience rating of the previous four weeks.

II-1-5 Average for different channel space of the previous space over the previous four weeks

Overview: An average for a different channel space of the program immediately before the corresponding program over the previous four weeks

Processing: Generate a data set for another station, and then calculate the average of the audience ratings for the program in which the broadcast start time of the corresponding space = the broadcast end time of the different channel space (different channel previous space) in the same way as in the audience rating of the previous four weeks.

II-1-6 Audience ratings of previous week

Overview: An audience rating of the corresponding program of the previous week

Processing: Create a data set limited to the previous week of the corresponding broadcasting station, and then calculate the audience rating in the same way as in the audience rating of the previous four weeks.

II-1-7 Program start time

Overview: Start time of the corresponding program

Processing: Enter the program start time in hour and minute units in 24-hour clock.

II-1-8 Program end time

Overview: End time of the corresponding program

Processing: Enter the program end time in hour and minute units in 24-hour clock.

II-1-9 Broadcast time

Overview: Broadcast minutes
Processing: Broadcast end time - broadcast start time.

II-1-10 Day of week

Overview: Day of the week broadcast
Processing: Replace each day as follows: Sun = 0 / Mon = 1 / Tue = 2 / Wed = 3 / / Thur = 4 / Fri = 5 / Sat = 6.

II-1-11 Day type

Overview: Categorization of a broadcast day into weekday and weekend/holiday
Processing: Replace each day as follows: Mon to Fri = weekday / Sat and Sun = weekend.

II-1-12 Broadcasting station name

Overview: Broadcasting station name

II-2 <Program content factor>

II-2-1 Viewing sensation cluster

Overview: Processing of flagging depending on whether or not it has an adjectival word of 23 viewing sensation clusters (flagging: processing of assigning 1 if a condition is met and 0 if the condition is not met (the same applies hereinafter))
Processing:

1. Extract the adjectival verb phrase from one year's worth of EPG program detailed information by natural language processing.
2. Generate co-occurring word clusters (viewing sensation clusters) (23 clusters).
3. Flag depending on whether or not the EPG program detailed information for each program belongs to the viewing sensation clusters generated in the above 2.
4. Compress the "viewing sensation clusters" into n dimensions by singular value decomposition.

II-2-2 Cast information

Overview: Whether or not the names of 300 cast members who frequently appear are listed in the EPG program detailed information.
Processing:

1. Flag depending on whether or not the names of the top 300 frequently appearing cast members are listed in the EPG program detailed information.
2. Compress the "cast information" into n-dimensions by singular value decomposition.

II-2-3 Keyword category

Overview: A content ratio of 28 keyword categories provided by WireAction Inc. for each program ID
Processing:

1. Calculate the content rate of the keyword categories provided by WireAction Inc. for each program ID; specifically, count the number of minutes that the target keyword category is included in the content of the specific program, and calculate the content rate by dividing "the corresponding number of minutes" by "the total of minutes of the program".
2. Compress the "keyword category" into n-dimensions by singular value decomposition.

II-2-4 Topic category

Overview: A content ratio of 35 topic categories provided by WireAction Inc. for each program ID
Processing:

1. Calculate the content rate of the topic categories provided by WireAction Inc. for each program ID, specifically, count the number of minutes that the target topic category is included in the content of the specific program, and calculate the content rate by dividing "the corresponding number of minutes" by "the total of minutes of the program".
2. Compress the "topic category" into n-dimensions by singular value decomposition.

II-2-5 Information type

Overview: A content ratio of 45 information types provided by WireAction Inc. for each program ID
Processing:

1. Calculate the content ratio of the information type provided by WireAction Inc. for each program ID. Specifically, count the number of minutes that the target information type is included in the content of the specific program, and calculate the content rate by dividing "the corresponding number of minutes" by "the total of minutes of the program".
2. Compress the "information type" into n-dimensions by singular value decomposition.

II-2-6 Person weight max

Overview: The maximum number of Google search results for the entertainers under person classification

II-2-7 Total person weight

Overview: The total number of Google search results for the entertainers under person classification

II-2-8 VR program category

Overview: Major genres of programs provided by Video Research Ltd.

II-2-9 Total number of times EPG has been previously browsed

Overview: The number of times G Guide Mobile has been previously browsed
Processing: Use the total number of times the data for the first three days out of the seven days before the broadcast day has been previously browsed.

II-2-10 Total number of times Yahoo! TV program guide has been previously browsed

Overview: The number of times Yahoo! TV program guide has been previously browsed
Processing: Use the total number of times the data for the first three days out of the seven days before the broadcast day has been previously browsed.

II-2-11 Number of times EPG has been previously browsed for each target

Overview: The number of times G Guide Mobile has been previously browsed for each target layer
Processing: Use the accumulated number of times the data for the first three days out of the acquired data for seven days before the broadcast day has been previously browsed.

II-2-12 Number of times different channel program (back program) has been previously browsed for each target

Overview: Substitute the number obtained by dividing the number of times the G Guide Mobile for the corresponding program has been previously browsed by the total of the number of times the corresponding program and the back program have been previously browsed.
Processing: Use the accumulated number of times the data for the first three days out of the acquired data for seven days before the broadcast day has been previously browsed.

It is noted that the number of times EPG has been previously browsed is the number of accesses to the program detailed information in the electronic television program guide provided by IPG, Inc., and the electronic television program guide is provided as "G Guide Mobile" for mobile terminals and as "Yahoo! TV program guide" for Yahoo! TV (http://tv.yahoo.co.jp/) .

It is noted that the above-mentioned variables are not limited to those described herein. Further, the companies, organizations, etc. from which the data is obtained are not limited to the companies, organizations, etc. described above.

III. Next, an "algorithm" adopted for the SHARE 101 in the present example will be described.

The "algorithm" adopted for the SHARE 101 is not limited to a specific algorithm as long as the "target output", i.e., a "high-accuracy predicted audience rating" can be obtained.

In this example, a case where a "random forest" is adopted as the "algorithm" in the SHARE 101 will be described.

III-1 Concept

The "random forest" is one of the methods called "group learning" in which learning is performed by aggregating a plurality of prediction results derived by a weak learning machine that performs learning with a simple model, and is also a method of machine learning with "high prediction accuracy" and " readability of result".

The "random forest" uses a "decision tree" for each individual weak learning machine, and it can be said that it is a method that solves the problem while making best use of the "decision tree".

The decision tree is a prediction method in which space is sectioned by straight lines orthogonal to the axis, and a prediction value is assigned to each section. The decision tree is widely used for the analysis of simple distribution data where it is easy to visualize the reason for prediction results because the space is decomposed linearly.

On the other hand, the model is over-simplistic, so it may be the case that high prediction accuracy cannot be provided for complex distribution data.

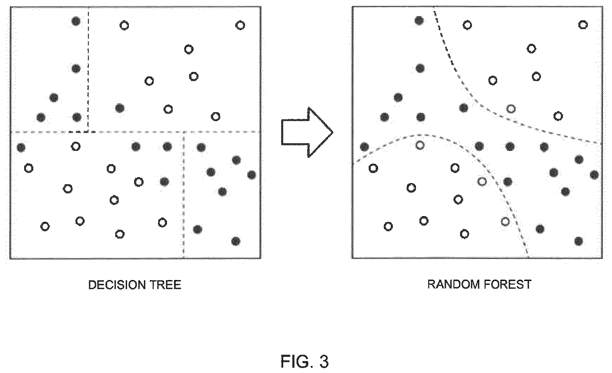

In view of this, as illustrated in Fig. 3, the "random forest" is configured so that a plurality of decision trees are generated and the space is curvilinearly sectioned by averaging the prediction results, and highly accurate prediction can be provided even for complex distribution data for which high accuracy cannot be achieved with only the decision tree.

III-2 Readability of data

As described above, each individual weak learning machine also has the features of the decision tree as well as "high prediction accuracy" and "generalization ability", thus making it easy to perform "cause analysis of prediction results" by analyzing the "highest prediction accuracy weak learning machine", and is also suitable for performing the steady improvement operation of a "prediction model".

III-3 Generalization ability

Since the "random forest" is group learning, it is also excellent in "generalization ability" (prediction accuracy for unknown data). Conventional machine learning uses all attributes and individuals in the data for one learning, so it adheres too closely to the data used for learning, thereby resulting in reduced "prediction accuracy for unknown data" (over-learning).

On the other hand, group learning such as the "random forest" uses only a part of attributes and individuals for learning, so it performs learning using data including unknown data at the training stage, thereby resulting in enhanced ability to cope with unknown data.

III-4 Scalability to data size

In the "random forest", even if the input data is large-scale data, a limited data set is allocated to each individual weak learning machine. In addition, each individual weak learning machine can perform prediction independently of the results of other weak learning machines and also perform the prediction in a different system environment, thereby enabling "distributed processing", which can analyze an increased amount of data by scaling the infrastructure linearly without increasing the calculation time.

IV. Points for solving problems in a conventional method

The problems found in a conventional method and points for solving the problems will be described here.

IV-1 Problems in the conventional method

As described in above I., the conventional method is based on "multiple regression analysis". The following represents the "regression equation" (Equation 1) using multiple regression analysis.

```
[Equation 1]
Program audience rating <= Broadcasting station name + Day
of week + Broadcast time
```

Basically, only composition information on a program (broadcasting station name, day of broadcast, and broadcast time) has been adopted as explanatory variables.

This is because in the background, the "multiple regression analysis" has a problem that "prediction accuracy" decreases as the number of explanatory variables increases. For this reason, in the "multiple regression analysis", only limited program composition information could be considered.

However, originally, the program audience rating largely changes depending on the "program content factors" (genre, casts, etc.) of the program itself.

As an example, a drama in which a popular actor appears has a high audience rating.

Thus, the audience rating for each program cannot be predicted with high accuracy if the "program content factors" cannot be considered.

In addition, in order to consider information on programs such as genres and cast members, it is necessary to handle a huge number of "explanatory variables" such as "TV metadata" and "EPG program detailed information" which are introduced in above II. This causes a problem where "it is difficult for the conventional multiple regression analysis to process variables" as described above.

Therefore, in order to solve the problem in the "method" using the "multiple regression analysis", it is necessary to implement an "algorithm" that has the functions of performing "big data processing" to incorporate the information of "program content factors" into a model and "high-speed arithmetic processing" that can provide a daily predicted audience rating.

Therefore, since the "random forest" can perform the "big data processing", the "high-speed arithmetic processing", and "prediction value stabilization", it has been decided to adopt the random forest for the present example as being most suitable for constructing an "audience rating prediction model" used in the SHARE 101.

IV-2 Points of problem solution

Here, "a method of obtaining the audience rating" using the "random forest" in the present example will be described.

The "random forest" is a method that creates a large number of decision trees by sampling and extracting "variables × records" from data based on a method called CART, and combines the individual decision trees to generate a high-accuracy model.

Since there is also a decision tree that uses "variables" other than "influential variables" to make predictions in a plurality of decision trees, the random forest can provide the effects of all "explanatory variables" when making a comprehensive prediction determination.

Taking advantage of the function that enables performing arithmetic operation on "mass data", which is a characteristic of the "random forest", handling data that cannot be processed as explanatory variables in conventional multiple regression analysis due to the large amount of data, such as "EPG program detailed information", "the number of times of EPG previews", and "metadata" which is based on text such as "topic information" and "keyword information" related to the program makes it possible to generate a "prediction model" taking into account "(program) content information" for each program.

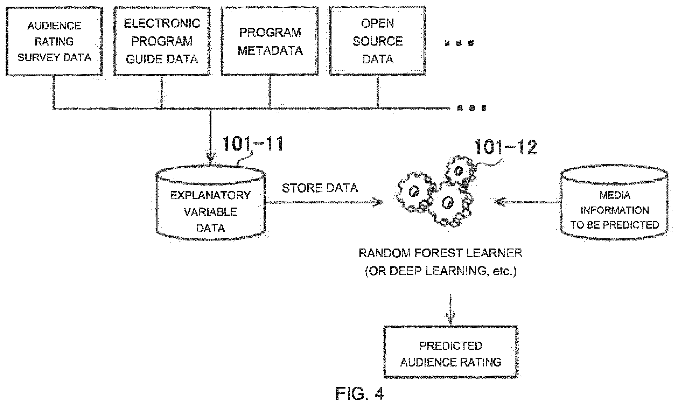

Next, the construction of a "prediction model" in the SHARE 101 will be described with reference to Fig. 4.

The SHARE 101 constructs a "prediction model" in such a way that data necessary to construct the "prediction model", for example, audience rating survey data such as "Video Research data", electronic program guide data (including program composition data, the number of times each program has been previously browsed, etc.) such as "IPG data", program metadata such as "WireAction data", and "TV viewing related data" such as "open source data", is first aggregated into an "explanatory variable database" 101-11, "explanatory variable conversion" processing as described above in II. is performed on the "explanatory variable database" 101-11, and the "data of explanatory variable" is stored in a "random forest learner" 101-12.

Further, the "random forest" is configured to calculate a "predicted audience rating" (predicted media contact rate) of "media to be predicted" as an output of the "random forest learner" 101-12 by inputting "media information to be predicted" (advertisement space information) as input data to the "random forest learner" 101-12.

Table 1 is a table in which "importance", which is an index of usefulness of an "explanatory variable", is listed against "prediction accuracy" for each "explanatory variable".

[Table 1]

| Variable | News | Drama in general | Enter-tainment | Cartoon/Kids | Comedy | Thriller/Action | Quiz/Game | Cinema | Education | Music | Sports | Variety | Overseas TV Drama | Other |
|---|---|---|---|---|---|---|---|---|---|---|---|---|---|---|
| Average for corresponding space over previous 4 weeks | 81405.22 | 40677.90 | 66912.56 | 11883.49 | 831.71 | 8783.09 | 2353.65 | 2077.90 | 89181.49 | 4163.14 | 3955.24 | 449.59 | 362.04 | 2.40 |
| Average for different channel space over previous 4 weeks | 9176.68 | 2214.58 | 12133.07 | 385.77 | 20.63 | 980.64 | 2423.71 | 417.11 | 6822.16 | 664.21 | 1271.20 | 120.52 | 72.16 | 2.43 |
| Average for previous space over previous 4 weeks | 36026.44 | 22437.20 | 30131.18 | 4762.89 | 289.39 | 2239.72 | 383.18 | 1035.98 | 36898.87 | 1467.03 | 676.67 | 93.81 | 209.77 | 1.43 |
| Average for different channel space of previous space over previous 4 weeks | 6203.42 | 1381.56 | 6209.34 | 296.52 | 15.58 | 719.82 | 688.81 | 759.36 | 5412.53 | 502.04 | 483.38 | 73.48 | 26.73 | 1.63 |
| Broadcasting station | 15860.09 | 747.23 | 3177.76 | 1056.31 | 13.89 | 577.72 | 109.06 | 93.52 | 2874.60 | 195.60 | 2790.89 | 16.88 | 29.20 | 0.01 |
| Day of week | 1277.96 | 372.90 | 1194.24 | 156.53 | 34.87 | 209.11 | 229.32 | 153.00 | 1031.22 | 70.88 | 188.20 | 79.36 | 69.46 | 0.00 |
| Day type | 150.41 | 17.51 | 123.13 | 6.78 | 0.53 | 31.56 | 126.54 | 2.24 | 87.69 | 2.09 | 32.14 | 14.63 | 14.31 | 0.00 |
| Broadcast start time | 1899.97 | 2384.82 | 15739.40 | 591.42 | 85.85 | 3594.63 | 1164.99 | 710.07 | 4581.36 | 1750.19 | 1572.66 | 54.19 | 231.95 | 0.17 |
| Broadcast end time | 8974.09 | 2259.73 | 17590.12 | 477.99 | 437.56 | 2618.04 | 1815.83 | 663.65 | 13115.96 | 2081.15 | 2360.56 | 71.24 | 495.64 | 0.35 |
| Program broadcast week | 2157.35 | 214.04 | 1021.67 | 120.87 | 16.87 | 225.10 | 109.26 | 45.97 | 1442.60 | 82.61 | 135.87 | 83.09 | 19.35 | 1.27 |
| Person weight max | 273.74 | 95.42 | 43.83 | 11.64 | 0.28 | 31.28 | 3.16 | 0.00 | 226.65 | 15.76 | 19.67 | 0.00 | 0.24 | 0.00 |
| Total person weight | 143.16 | 69.09 | 67.54 | 21.78 | 0.27 | 35.62 | 4.10 | 0.00 | 362.50 | 21.56 | 23.86 | 0.00 | 0.93 | 0.00 |
| Broadcast time | 2630.94 | 4062.94 | 3746.19 | 57.99 | 11.31 | 350.72 | 308.68 | 63.48 | 2251.93 | 342.97 | 963.18 | 240.26 | 76.13 | 0.05 |
| Viewing sensation cluster 1 | 242.61 | 75.88 | 440.65 | 37.03 | 8.26 | 63.45 | 32.27 | 29.28 | 381.36 | 18.91 | 24.32 | 19.27 | 6.99 | 0.01 |
| Viewing sensation cluster 2 | 247.76 | 87.98 | 428.04 | 48.48 | 13.45 | 71.50 | 42.70 | 22.13 | 380.71 | 30.37 | 40.41 | 20.26 | 5.44 | 0.03 |
| Viewing sensation cluster 3 | 365.26 | 111.34 | 477.77 | 172.98 | 7.93 | 65.17 | 32.68 | 29.49 | 424.11 | 23.88 | 25.72 | 19.81 | 6.75 | 0.03 |
| Viewing sensation cluster 4 | 222.42 | 95.85 | 450.11 | 45.35 | 8.16 | 63.99 | 35.95 | 23.79 | 395.91 | 28.63 | 23.93 | 20.50 | 7.76 | 0.03 |
| Viewing sensation cluster 5 | 209.49 | 84.61 | 449.08 | 309.58 | 5.51 | 72.65 | 24.96 | 26.50 | 393.84 | 23.32 | 34.05 | 17.10 | 6.32 | 0.02 |
| Topic category 1 | 2594.48 | 96.33 | 763.95 | 821.29 | 107.53 | 198.26 | 58.97 | 8.18 | 1458.24 | 46.20 | 257.52 | 27.01 | 12.62 | 0.01 |
| Topic category 2 | 829.68 | 911.19 | 675.57 | 87.70 | 203.73 | 492.38 | 87.02 | 3.96 | 1259.11 | 22.10 | 146.22 | 21.01 | 22.28 | 0.00 |
| Topic category 3 | 445.30 | 182.93 | 1013.61 | 2503.98 | 138.01 | 82.92 | 171.53 | 7.15 | 3457.74 | 36.58 | 72.90 | 17.23 | 8.95 | 0.01 |
| Topic category 4 | 1712.76 | 184.58 | 1080.57 | 788.84 | 7.25 | 107.04 | 69.52 | 3.87 | 1215.36 | 175.07 | 257.87 | 10.05 | 17.64 | 0.01 |
| Topic category 5 | 2448.26 | 90.15 | 542.79 | 761.46 | 342.98 | 223.08 | 48.73 | 28.42 | 955.03 | 247.42 | 953.94 | 10.31 | 9.04 | 0.01 |
| Keyword category 1 | 4170.39 | 120.28 | 765.67 | 185.37 | 13.60 | 103.79 | 67.81 | 82.19 | 859.65 | 40.22 | 68.73 | 6.66 | 4.67 | 0.01 |
| Keyword category 2 | 1570.91 | 304.12 | 740.15 | 357.36 | 234.23 | 116.33 | 16.43 | 162.08 | 614.65 | 22.56 | 76.49 | 27.12 | 15.85 | 0.00 |
| Keyword category 3 | 2123.39 | 287.75 | 579.23 | 401.50 | 4.91 | 101.52 | 366.65 | 25.51 | 1867.98 | 43.55 | 95.97 | 25.25 | 8.63 | 0.01 |
| Keyword category 4 | 517.81 | 95.86 | 611.12 | 361.94 | 6.60 | 351.63 | 22.95 | 6.22 | 659.46 | 71.89 | 192.27 | 26.77 | 6.34 | 0.02 |
| Keyword category 5 | 408.60 | 1744.70 | 496.91 | 184.26 | 234.63 | 84.30 | 53.83 | 24.69 | 930.13 | 16.93 | 131.99 | 23.88 | 7.04 | 0.02 |
| Information type 1 | 902.82 | 516.71 | 529.18 | 142.59 | 16.41 | 92.32 | 69.87 | 33.08 | 973.70 | 83.68 | 528.91 | 26.36 | 4.06 | 0.01 |
| Information type 2 | 1549.26 | 121.07 | 551.50 | 206.68 | 35.80 | 110.12 | 45.91 | 30.91 | 590.36 | 63.85 | 83.03 | 5.11 | 3.66 | 0.02 |
| Information type 3 | 513.43 | 168.37 | 552.79 | 108.04 | 43.22 | 170.98 | 66.83 | 10.68 | 1071.74 | 21.13 | 346.49 | 6.61 | 4.59 | 0.02 |
| Information type 4 | 654.97 | 206.72 | 605.01 | 75.94 | 8.66 | 130.94 | 59.90 | 12.28 | 987.29 | 56.78 | 213.43 | 4.74 | 1.41 | 0.01 |
| Information type 5 | 1778.82 | 92.31 | 516.11 | 371.29 | 9.20 | 119.52 | 145.59 | 19.59 | 994.41 | 85.39 | 282.00 | 30.72 | 5.99 | 0.01 |
| Cast information 1 | 209.39 | 61.51 | 140.63 | 25.10 | 2.42 | 42.07 | 11.05 | 3.53 | 2359.14 | 39.51 | 94.58 | 0.00 | 1.11 | 0.00 |
| Cast information 2 | 210.69 | 40.04 | 128.82 | 61.24 | 1.60 | 191.71 | 4.91 | 2.44 | 358.01 | 4.95 | 19.21 | 0.00 | 0.16 | 0.00 |
| Cast information 3 | 217.49 | 104.88 | 170.74 | 32.80 | 0.87 | 52.99 | 9.79 | 3.85 | 256.03 | 27.20 | 246.00 | 0.00 | 0.31 | 0.00 |
| Cast information 4 | 296.37 | 45.02 | 145.99 | 48.85 | 1.01 | 30.68 | 16.30 | 8.15 | 1111.81 | 30.09 | 43.92 | 0.00 | 0.41 | 0.00 |
| Cast information 5 | 330.06 | 148.16 | 185.69 | 17.64 | 1.44 | 27.74 | 21.84 | 5.84 | 957.15 | 21.06 | 159.14 | 0.00 | 0.13 | 0.00 |
| Number of times EPG has been previously browsed | 795.52 | 5432.91 | 1328.81 | 168.22 | 11.00 | 355.29 | 132.09 | 75.45 | 1167.25 | 79.05 | 226.01 | 28.89 | 31.63 | 0.70 |
| Number of times XXX program has been previously browsed | 1394.97 | 16171.64 | 2254.72 | 191.23 | 171.77 | 699.21 | 339.60 | 94.70 | 1558.17 | 116.23 | 215.27 | 46.46 | 43.29 | 1.92 |

In Table 1 above, the top (horizontal) indicates "program genre", and the side (vertical) indicates "explanatory variables". In addition, portions in which cells in the table are indicated by "mesh" indicate high "importance", which is "useful" for improving the prediction accuracy.

For example, it can be seen that "Average for corresponding space over previous 4 weeks" is of "high" "importance" "explanatory variable" to "improve the prediction accuracy" in any genre of the program.

However, "explanatory variables" such as "Average for corresponding space over previous 4 weeks", "Average for different channel space over previous 4 weeks", "Average for previous space over previous 4 weeks", and "Average for different channel space of previous space over previous 4 weeks" are inevitably of high "importance" because they inherently have "high correlation" with the "program to be predicted". In addition, since they are variables corresponding to the space information that has been taken into account in the conventional multiple regression analysis, they do not apply as a solution to the above-mentioned problem. That is, they cannot be considered as "explanatory variables" specific only to the "random forest".

On the other hand, "topic category" and "keyword category" representing "program content information" are of high "importance" depending on "program genre", and are useful as "explanatory variables".

Furthermore, it can be also seen that there are "program genres" which are of "high" "importance" for the "the number of times EPG has been previously browsed" and "the number of times Yahoo! program guide has been previously browsed".

For conventional "multiple regression analysis", it is difficult to process "mass data" such as "metadata" that is the data source of "program content information", and a "prediction model" based on "multiple regression analysis" was unsuccessful in verifying the usefulness of that data as "explanatory variables". By contrast, for a "prediction model" based on the "random forest" which makes it possible to process "mass data", it can be seen from Table 1 that the "program content information" is useful to "improve the prediction accuracy".

Actually, a comparison between a "prediction result" based on the "multiple regression analysis" taking into account only "space information" with a "prediction result" based on the "random forest" further "taking into account the content information" was performed.

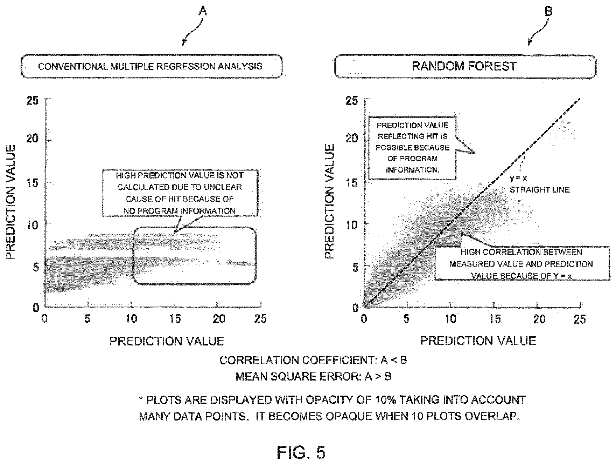

Fig. 5, as described below, illustrates a comparison between the result based on the multiple regression analysis with the result based on the random forest.

It can be seen from Fig. 5 that "the 'prediction result' calculated by the random forest has a high correlation with the actual measurement".

"Correlation coefficient" and "mean square error" can be seen as "indexes" for evaluating the degree of prediction accuracy.

The "correlation coefficient" means that the "correlation" between the "actual value" and the "prediction value" is stronger the closer a value is to "1", and the "mean square error" means that the "error" between the "actual value" and the "prediction value" is smaller "as the value is smaller".

In the numbers illustrated in Fig. 5, it can be seen that the "random forest" has a "correlation coefficient" closer to 1 and a smaller "mean square error" as compared to the multiple regression analysis, and provides a higher "prediction accuracy".

It is noted that although there is another "prediction method" called "deep learning" different from the "random forest" described above, and that other algorithms such as "deep learning" can be adopted as an algorithm used for the SHARE 101 of the present invention, the explanation of other algorithms such as "deep learning" is omitted herein for the sake of simple explanation.

The SHARE 101 described above can handle "big data" including "metadata" indicating a detailed genre and category of media, and access data to a program guide indicating the expected value of media, and is further configured to set as the explanatory variable an "external factor", a "composition factor", and a "content factor" by combining a "cloud platform" capable of processing the big data at high speed, an analysis method such as "deep learning" that improves accuracy by self-learning using various variables, and the like, and "predict the audience rating" taking into account all factors that are able to affect the audience rating.

Next, the TAOS 102 will be described.

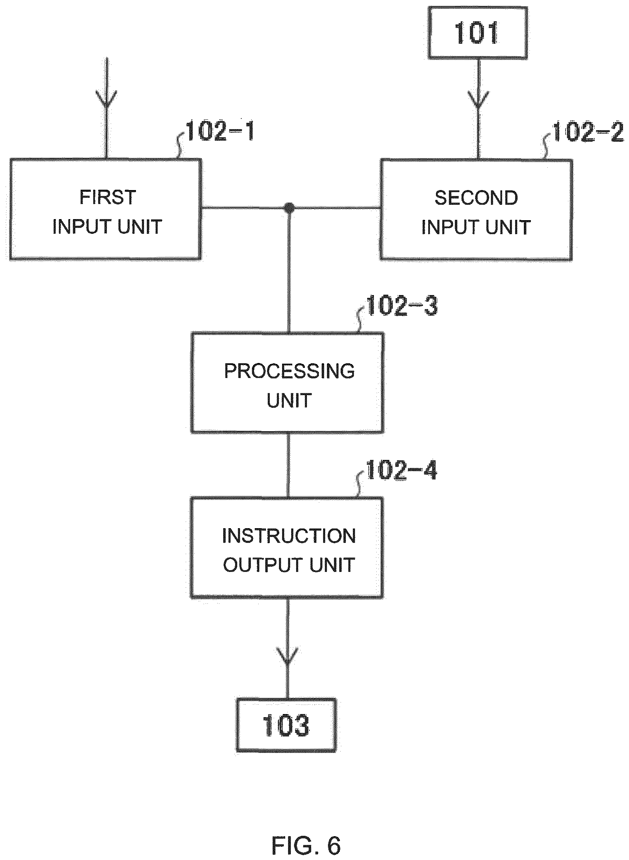

Fig. 6 is a block diagram schematically illustrating the configuration of a preferred embodiment of the TAOS 102.

As illustrated in Fig. 6, the TAOS 102 according to the present embodiment includes: (1) a first input unit 102-1 serving as a first input means configured to receive an input of first commercial space draft data including information such as a "reference past audience rating" and a "buying cost"; (2) a second input unit 102-2 serving as a second input means connected to the SHARE 101 to receive an input of second commercial space draft data including information such as a "predicted audience rating" and/or a "real-time audience rating"; (3) a processing unit 102-3 serving a processing means connected to the first input unit 102-1 and the second input unit 102-2 and/or configured to include a reallocation program and generate and output target actual optimization data by using the reallocation program, based on the first commercial space draft data received by the first input unit 102-1 and the second commercial space draft data received by the second input unit 102-2; and (4) an instruction output unit 102-4 serving as an instruction output means connected to the processing unit 102-3 to receive an input of the target actual optimization data output from the processing unit 102-3 and output the target actual optimization data to the CORE 103.

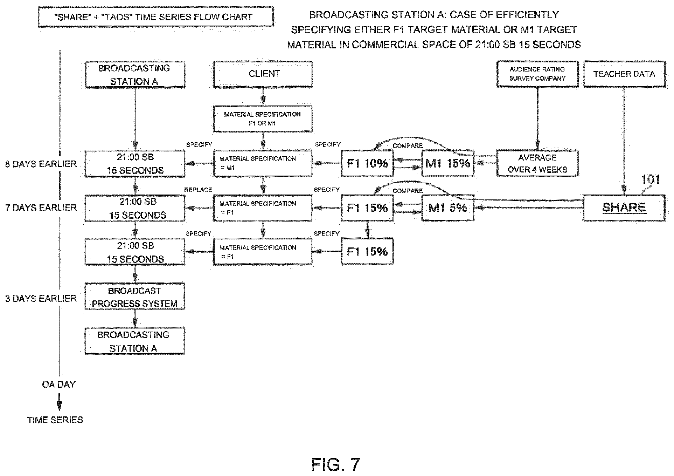

Fig. 7 is a flowchart for describing the operation of the TAOS 102 illustrated in Fig. 6.

Here, processing performed by the TAOS 102 will be described in detail with reference to Figs. 6 and 7.

The TAOS 102 first receives from the first input unit 102-1 a "past-based future audience rating" (first data) which has been predicted based on "an average of past audience ratings over four weeks" etc. by an external organization or an external system (for example, Video Research Ltd. etc.). (That is, [a.] First data = data of "past-based future audience rating") is received (processing by the TAOS 102: step a).

In step a, the external organization has predicted that an individual audience rating of 15.0% for an M1 layer (males aged 20 to 34 years old) and an individual audience rating of 10.0% for an F1 layer (females aged 20 to 34 years old) will be able to be acquired.

Then, a "predicted future audience rating" (second data) generated by the SHARE 101 is received from the second input unit 102-2. (That is, [b.] Second data = data of "predicted future audience rating" (processing by the TAOS 102: step b).

In step b, in this example, the SHARE 101 has predicted that an individual audience rating of 5.0% for the M1 layer (males aged 20 to 34 years old) and an individual audience rating of 15.0% for the F1 layer (females aged 20 to 34 years old) will be able to be acquired.

Simply comparing the results of step a and step b, an advertisement material of commercial material A of the advertiser with the F1 layer as the target is allocated to broadcast space X. That is, in the TAOS 102, the processing unit 102-3 provisionally allocates materials (advertisement materials) for all respective brands by using the "reallocation program" based on the "predicted future audience rating" as described above (processing by the TAOS 102: step c).

However, in practice, as to whether to allocate the advertisement material of the product for the M1 layer or the advertisement material of the product for the F1 layer, a combination of various factors such as, for example, broadcast priority information (immediately before a campaign period) for material A for the M1 layer, which is received by the first input unit 102-1, is used to determine which layer's advertisement material for the product will ultimately be allocated.

Basically, since it is an index that the actual GRP acquired by transferring the material increases (= the amount of money to be paid increases), the advertisement material of the product for the F1 layer (females aged 20 to 34 years old), which has a high predicted individual audience rating percentage of "15.0%", is to be allocated in the example illustrated in Fig. 7.

However, for example, in the case where the campaign period of the advertisement material for the M1 layer is to be terminated in the near future, the processing unit 102-3 may have an option to broadcast the advertisement material for the M1 layer without transferring it.

Here, the "GRP" and the "actual GRP" in the advertising industry will be described.

The GRP in the advertising industry represents a quantitative "index" of commercial based on "amount of advertisement" and "audience rating", and is also referred to as "total audience rating".

The GRP is used for "spot commercial" transactions broadcast in a time slot (commercial time space) defined by a broadcasting station, and the larger the GRP number, the more viewers the commercial messages will be delivered to.

The GRP is also an "index" linked directly to "publishing plan" and "advertising plan" for advertisers and advertising agencies, while it is an "index" for "stock management" of advertisement spaces as viewed from television broadcasting stations which are media companies.

Specifically, in a case where an advertiser publishes ten spot commercials to a television, the total audience rating, which is obtained by simply adding up ten audience ratings taken from a certain point in the past on the day of week and in the time slot or on the program on which the commercial is to be broadcast, is the GRP of that commercial. More precisely, the GRP of the commercial is "the average value for the program and the time slot in which the commercial has been arranged over a past specific period of four weeks (the average over the past four weeks is referred to as "Score" ("Gosu")).

More specifically, for example, when five advertisements (commercials) are published in the space having a household audience rating of 15%, ten in the space having a household audience rating of 10%, and ten in the space having a household audience rating of 5%, the value of GRP is 225 based on the following equation.

$$(15\% \times 5) + (10\% \times 10) + (5\% \times 10) = 225 \text{ GRP}$$

Although the above value is the cumulative value of the audience rating calculated based on the average value data over the past specific period of four weeks, when it is actually on air, the audience rating is almost never the same, and in many cases, different audience ratings will be measured. The GRP obtained by aggregating the audience ratings actually measured when it is on air is particularly called "actual GRP". Then, in many cases, the advertisers or the advertising agencies use this actual GRP as an "index" for evaluation of the broadcasted commercial after the broadcast.

Here, returning to the explanation of the processing, the explanation of the processing by the TAOS 102 will be continued.

Case 1:

The case where the TAOS 102 obtains the rating data ([b. Data] = Second data = Data of predicted individual rating) predicted before the commercial is broadcast from the SHARE 101 (step b) will be described.

In step b, the individual audience ratings predicted before broadcast are obtained from the SHARE 101 as follows.

For example, the predicted individual audience rating of broadcast space X to which the advertisement material of commercial material A for the M1 layer has been allocated is as follows.

M1 layer: 5.0%
F1 layer (females aged 20 to 34 years old): 15.0%

In addition, the advertisement material of commercial material B for the F1 layer is also scheduled to be published at the same broadcasting station.

Next, the TAOS 102 evaluates the "difference" between the first data in [a.] and the second data in [b.] (the predicted audience rating before broadcast) for each commercial space ([c.] Third data = Difference between the simply-past-average-based future audience rating data based on four-week data and the predicted audience rating before broadcast calculated by the SHARE) (step c).

For step c, for example, the TAOS 102 uses the processing unit 102-3 to evaluate the "difference" between the (first and second) individual predicted audience ratings in the following manner.

(1) Calculate the reduced amount of advertising cost of commercial material A for the M1 layer in broadcast space X (reduced amount of cost of commercial material A) by the following equation:

```
(Relational equation 1)
Reduced amount of advertising cost of commercial
material A for the M1 layer in broadcast space X (reduced
amount of cost of commercial material A) = Per cost related
to publication of commercial material A for the M1 layer
(cost per 1% of audience rating (= 1 GRP)) × (Previous
individual audience rating for the M1 layer -Predicted
individual audience rating for the M1 layer).
```

(2) Calculate the increased amount of advertising cost when reallocated to the advertisement material of commercial material B for an F2 layer in broadcast space X (increased amount of cost of commercial material B) by the following equation:

(Relational equation 2)

Increased amount of advertising cost when reallocated to the advertisement material of commercial material B for the F1 layer in broadcast space X (increased amount of cost of commercial material B) = Per cost related to publication of commercial material B for the F1 layer × Predicted individual audience rating for the F1 layer.

Here, it is assumed that it is necessary to calculate "the difference between the average over the past four weeks and the predicted value (≈ the Actual)" for the M1 layer originally allocated, while it is not necessary to calculate "the difference between the average over the past four weeks and the predicted value (≈ the Actual)" for the F1 layer brought up as an alternative material. However, for very strict management, it is also necessary to take into account the difference between the average over the past four weeks for the F1 layer (alternative material) and the predicted audience rating.

More specifically, it is determined based on each of the following factors whether the advertisement material of commercial material A is to be broadcast as it is, or the advertisement material is to be reallocated to that of commercial material B.

(a): Compare [reduced amount of cost of commercial material A] with [increased amount of cost of commercial material B] to use the resulting relation for the determination.
For example, if a comparison between commercial material A: cost 10,000 yen × minus 10 GRP difference from prediction = reduced amount 100,000 yen from prediction, and commercial material B: cost 50,000 yen × 5 GRP immediately before (≈ the Actual) = predicted increased amount 250,000 yen when reallocated is performed, priority is given to commercial material B on-air.

(b): Whether or not there is a publication period for the advertisement material of commercial material A. For example, if the end of the advertisement campaign period for commercial material A is tomorrow, commercial material A is preferentially broadcast, etc.

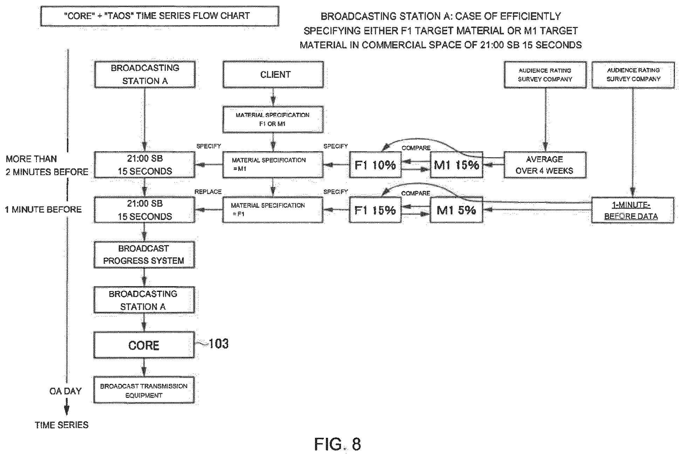

Fig. 8 is a flow diagram for describing an operation in another embodiment of the TAOS 102 illustrated in Fig. 6.

Here, processing performed by the TAOS 102 illustrated in Fig. 6 will be described in detail with reference to Fig. 8.

Case 2:

The case where the TAOS 102 obtains the audience rating data immediately before the commercial is broadcast, such as "one minute before the commercial is broadcast" ([b. Data] = Second data = Audience rating data from a predetermined time (one minute before) immediately before the commercial is broadcast), from an external organization or an external system (for example, Video Research Ltd. etc.) other than the SHARE 101 (step b').

Currently, it is possible to measure the audience rating in real time, and to view the measured audience rating on the Internet in real time, with such a service also being provided (for example, Switch Media Lab, Inc. / Data Analysis Service SMART, etc.).

In step b', the audience rating data immediately before broadcast is obtained from an external organization as follows.

For example, the audience rating immediately before broadcast of broadcast space X, to which the advertisement material of commercial material A for the M1 layer has been allocated, is obtained by the SHARE 101 as follows.

M1 layer: 5.0%
F1 layer (females aged 20 to 34 years old): 15.0%

In addition, the advertisement material of commercial material B for the F1 layer is also scheduled to be published at the same broadcasting station.

Next, the TAOS 102 evaluates the "difference" between the first data in [a.] and the second data in [b'.] (the audience rating data one minute before) for each commercial space ([c'.] Third data = "Difference" between the audience rating data over four weeks and the audience rating data one minute before) (step c').

For step c', for example, the TAOS 102 uses the processing unit 102-3 to evaluate the "difference" between the (first and second) individual audience ratings in the following manner.

(1) Calculate the reduced amount of advertising cost of commercial material A for the M1 layer in broadcast space X (reduced amount of commercial material A) by the following equation:

```
(Relational equation 1')
    Reduced amount of advertising cost of commercial
material A for the M1 layer in broadcast space X (reduced
amount of cost of commercial material A) = Per cost related
to publication of commercial material A for the M1 layer
(cost per 1% of audience rating (= 1 GRP)) × (Individual
audience rating over four weeks for the M1 layer -
Individual audience rating for the M1 layer immediately
before broadcast).
```

(2) Calculate the increased amount of advertising cost when reallocated to the advertisement material of commercial material B for the F2 layer in broadcast space X (increased amount of cost of commercial material B) by the following equation:

```
(Relational equation 2')
    Increased amount of advertising cost when reallocated
to the advertisement material of commercial material B for
the F2 layer in broadcast space X (increased amount of cost
of commercial material B) = Per cost related to publication
of commercial material B for the F1 layer × Individual
audience rating for the F1 layer immediately before
broadcast.
```

Here, it is assumed that it is necessary to calculate "the difference between the average over the past four weeks and the value immediately before broadcast ($\approx$ the Actual)" for the M1 layer originally allocated, while it is not necessary to calculate "the difference between the average over the past four weeks and the value immediately before broadcast ($\approx$ the Actual)" for the F1 layer treated with as an alternative material. However, for very strict management, it is also necessary to take into account the difference between the average of the audience ratings over the past four weeks for the F1 layer (alternative material) and the audience rating immediately before broadcast.

More specifically, it is determined based on each of the following factors whether the advertisement material of commercial material A is to be broadcast as it is, or the advertisement material is to be reallocated to that of commercial material B.

Case (a'): Compare [reduced amount of cost of commercial material A] with [increased amount of cost of commercial material B], and use the resulting relation for the determination.

For example, if a comparison between commercial material A: cost 10,000 yen × minus 10 GRP difference from the value immediately before = reduced amount 100,000 yen from the value immediately before, and commercial material B: cost 50,000 yen × 5 GRP immediately before ($\approx$ the Actual) =increased amount 250,000 yen from the value immediately before when reallocated is performed, priority is given to commercial material B on the air.

Case (b'): Whether or not there is a publication period for the advertisement material of commercial material A. For example, if the end of the advertisement campaign period for commercial material A is tomorrow, commercial material A is preferentially broadcast, etc.

The CORE 103 performs the optimization material allocation "again" based on [c.] the third data (step e).

Step e involves replacing the material in the server of the broadcasting station.

Here, "again" is specifically as follows.

In general, a material for a TV commercial advertisement is specified no later than three business days before the start of the space broadcast. In response to the material specification specified no later than three business days before, the most appropriate material is allocated "again" based on the individual audience rating data obtained immediately before. Since it is usually assumed that the broadcasting station will on-air the commercial material as specified by the advertising agency, specifying the most appropriate material "again" is to transmit a signal for re-specification "from the advertising agency to the broadcasting station" and replace the material specification in the broadcasting station according to the signal.

Next, the TAOS 102 directly transmits each space material specification after reallocation to the CORE 103 (step f).

The TV commercial material is separately filed in the CORE 103, and can be individually specified.

Hereinafter, a configuration of an embodiment of the constantly optimum relocation equipment (CORE) which serves as a part of the advertisement space optimization system illustrated in Fig. 1 will be described.

The CORE is configured to execute "replacement of material" (change in material specification) for a "list of commercial materials scheduled to be broadcast" and a "commercial material bank" based on information obtained from the SHARE 101, that is, the "audience rating data immediately before broadcast" after the TAOS 102 executes "optimization of the broadcast commercial material".

Therefore, in the "commercial material bank", not only "commercial materials scheduled to be broadcast" but also commercial materials which may be broadcasted after being replaced with another commercial material ("commercial materials which may be replaced") are stored in association with codes for identifying the commercial materials (in the "commercial material bank").

Here, the case where a specific commercial material is specified to be replaced at a specific time-for example, the case where "material A" is specified to be broadcast in the "list of commercial materials scheduled to be broadcast" but the TAOS 102 specifies to replace "material A" arranged in the "list of commercial materials scheduled to be broadcast" with "material B" arranged in the "commercial material bank"-will be described.

It is noted that "material A" is associated with a code for identifying "material A" and a code for identifying a "scheduled broadcast time slot" (these two codes are collectively referred to as "scheduled broadcast material code"), and the "scheduled broadcast material code" is arranged in the "list of commercial materials scheduled to be broadcast".

In response to the instruction from the TAOS 102, the CORE 103 removes "material A" from the timeline, transmits a signal to instruct to replace it with "material B" ("change in material specification") to the "list of commercial materials scheduled to be broadcast", and as a result, the timeline in the "list of commercial materials scheduled to be broadcast" is updated.

At the same time, the CORE 103 also transmits a signal (specifically, the "scheduled broadcast material code") to instruct to replace it with "material B" ("change in material specification") to the "commercial material bank". Accordingly, the code of "material B" is transmitted to the "list of commercial materials scheduled to be broadcast" and/or "image data" of "material B" is transmitted to a "transmitting device", and finally "material B" will be broadcast.

In the CORE 103, the signal to instruct to replace the material ("change in material specification") is directly transmitted from the advertising agency.

In the present example, the CORE 103 is configured to faithfully execute the "material replacement instruction" transmitted by the TAOS 102 to optimally arrange, according to the audience rating data acquired a predetermined time before ("a predetermined time before" in the present example indicating one minute before), the material a predetermined time after (similarly, "a predetermined time after" in the present example indicating one minute after) from the viewpoint of the "Actual".

It is noted that in the present example, the "commercial material" indicates an example of the material, but the material is not limited to the commercial material.

In addition, although the "commercial material bank" is usually installed at a broadcasting station, it may be installed at an advertising agency. In that case, it is configured so that image data of the commercial material from the "commercial material bank" installed at an advertising agency will be sent to the broadcasting station using such technology as EDI technology, but it may be configured so that the material specification is performed in real time directly from the advertising agency to the master of the broadcasting station.

For example, from an external organization (third party organization) such as an audience rating research company such as Video Research Ltd., it is configured to be able to obtain immediate data, for example, in the form provided by Switch Media Lab, Inc.

As described above, by using the CORE 103 of the present invention, it is possible to bring the "prediction limit" (= statistical error) of the predicted audience rating provided by the SHARE 101 closer to "0" to the limit.

In summary, the CORE 103 has a function of continuously specifying a commercial to be on air (OA) immediately before, and for the CORE 103, the SHARE 101 receives the audience rating data measured in real time by the third party organization and the TAOS 102 specifies the individual material (specification) in real time, thereby making it possible to optimize the allocation of the individual Actual which is individually measured for the (advertisement) space.

Further, by replacing the material immediately before, it is possible to dramatically avoid the Actual down as a result. Although the above description has mainly been made taking terrestrial television broadcast advertisements as an example, the present invention is not limited to this. That is, the present invention applies not only to terrestrial television advertisements, but also to satellite television advertisements, radio advertisements, advertisements broadcast in real time over the Internet, and advertisements using other broadcast media. In that case, for example, as the audience rating data, one different from that described herein may be used. As an example, the audience rating data may be used for satellite television, the rating data for radio broadcasting, and the audience rating data for broadcasts over the Internet.

[Industrial Applicability]

It is possible to replace the space of "0.0%" which frequently appears in an individual Actual with another individual actual material, and implementing the advertisement space optimization system according to the present invention described above provides an expectation of improvement in the achievement efficiency of advertising effectiveness by around 3% to 6%. This is assumed to result in a very large amount of money equivalent to efficiency improvement, considering the size of the annual amount of money invested in TV commercials. In addition, if the scope of application of the replacement source space is expanded (= replacement being also performed for a space with an audience rating of 0.1% or more), the amount of the achieved efficiency improvement of advertising effect and the amount of money equivalent to the efficiency improvement are expected to further increase significantly.

This application is based on Japanese Patent Application No. 2017-002006 filed on January 10, 2017, the entire content of which is incorporated herein.

**Claims**

1. An advertisement space optimization system for optimizing an advertisement space broadcast on a broadcast medium, the advertisement space optimization system comprising:

   a system for high-advanced rating estimate (SHARE); and a target actual optimization system (TAOS),
   wherein the SHARE is configured to predict a target audience rating with an accuracy higher than a predetermined accuracy and/or receive an input of audience rating data measured in real time by a third party organization, and transmit predicted audience rating data for an advertisement space and/or audience rating data immediately before broadcast to the TAOS, and
   the TAOS is configured to receive from the SHARE the predicted audience rating of an advertisement to be broadcast and/or audience rating data of the advertisement immediately before on air (OA), reallocate arrangement of a material for an advertisement space based on third data obtained by evaluating a difference between first data and second data for each advertisement space, and transmit a specification of the reallocated material for each advertisement space.

2. The advertisement space optimization system according to claim 1, further comprising constantly optimum relocation equipment (CORE),
   wherein the CORE is configured to directly receive the specification of the reallocated material for each advertisement space from the TAOS, and broadcast an advertisement for which each space material is adapted to each corresponding advertisement space based on the specification of the reallocated material for each advertisement space.

3. An advertisement space optimization system for optimizing an advertisement space broadcast on a broadcast medium, the advertisement space optimization system comprising
   a system for high-advanced rating estimate configured to include:

   a data input unit configured to receive an input of data and/or data source information;
   an explanatory variable conversion unit connected to the data input unit and/or configured to perform specific processing on the data source information received from the data input unit to convert the data source information into an explanatory variable;

a program implementation and execution unit connected to the data input unit and the explanatory variable conversion unit and/or configured to implement a program of a predetermined algorithm; and

a data output unit connected to the program implementation and execution unit and/or configured to output a result obtained by the implementation and execution unit,

wherein the program implementation and execution unit executes the algorithm of the implemented program by using the data received from the data input unit and/or the data source information and by using the explanatory variable obtained by the explanatory variable conversion in the explanatory variable conversion unit, outputs predicted audience rating data obtained by the execution of the algorithm from the output unit, and optimizes an advertisement space based on the output predicted audience rating data.

4. The advertisement space optimization system according to claim 3,

wherein the system for high-advanced rating estimate is configured to handle big data including at least one of metadata indicating a detailed genre and category of media, panel data surveyed by a research company (third party organization), access data to a program guide indicating an expected value of media, text data on an SNS, search information from a search site, and weather forecast, and

the system for high-advanced rating estimate is further configured to set an external factor, a composition factor, and a content factor as the explanatory variable by combining a cloud platform capable of processing the big data at high speed, and an analysis method of deep learning that improves accuracy by self-learning using various variables, and predict an audience rating taking into account factors that are able to affect the audience rating.

5. The advertisement space optimization system according to claim 3 or 4, further comprising

a target actual optimization system configured to include:

a first input unit configured to receive an input of first commercial space draft data including information of at least one of a reference past audience rating and a buying cost;

a second input unit connected to the system for high-advanced rating estimate to receive an input of second commercial space draft data including information of at least one of a predicted audience rating and a real-time audience rating; and

a data processing unit connected to the first input unit and the second input unit and/or configured to include a reallocation program, and generate and output target actual optimization data by using the reallocation program, based on the first commercial space draft data received by the first input unit and the second commercial space draft data received by the second input unit,

wherein the data processing unit evaluates a difference between the first commercial space draft data and the second commercial space draft data for each advertisement space by using the reallocation program, reallocates arrangement of a material for the advertisement space based on third commercial space draft data obtained as a result of the difference, and outputs target actual optimization data indicating a specification of the reallocated material for each advertisement space, and

the advertisement space optimization system further comprises the target actual optimization system configured to include an instruction output unit connected to the data processing unit to receive an input of the target actual optimization data output from the data processing unit and output the target actual optimization data.

6. The advertisement space optimization system according to claim 5, further comprising constantly optimum relocation equipment configured to directly receive the specification of the reallocated material for each advertisement space from the target actual optimization system, and broadcast an advertisement for which each space material is adapted to each corresponding advertisement space based on the specification of the reallocated material for each advertisement space.

7. A method of optimizing an advertisement space broadcast on a broadcast medium by using an advertisement space optimization system that includes a system for high-advanced rating estimate (SHARE), a target actual optimization system (TAOS), and constantly optimum relocation equipment (CORE), the method comprising:

a step of, by the SHARE, predicting a target audience rating with an accuracy higher than a predetermined accuracy and/or receiving an input of audience rating data measured in real time by a third party organization, and transmitting predicted audience rating data for an advertisement space and/or audience rating data immediately before broadcast to the TAOS;

a step of, by the TAOS, receiving from the SHARE the predicted audience rating of an advertisement to be broadcast and/or audience rating data of the advertisement immediately before on air (OA), reallocating arrangement of a material for an advertisement space based on third data obtained by evaluating a difference between first data and second data for each advertisement space, and directly transmitting a specification of the reallocated material for each advertisement space to the CORE; and

a step of, by the CORE, directly receiving the specification of the reallocated material for each advertisement space from the TAOS, and broadcasting an advertisement for which each space material is adapted to each corresponding advertisement space based on the specification of the reallocated material for each advertisement space.

8. A method of optimizing an advertisement space broadcast on a broadcast medium, the method comprising:

a step of receiving an input of data and/or data source information;
a step of performing specific processing on the received data source information to convert the data source information into an explanatory variable;
a step of implementing a program of a predetermined algorithm; and
a step of outputting a result obtained by the implemented program,
wherein the algorithm of the implemented program is executed by using the data and/or the data source information and by using the explanatory variable obtained by the explanatory variable conversion, predicted audience rating data obtained by the execution of the algorithm is output, and an advertisement space is optimized based on the output predicted audience rating data.

9. The method of optimizing an advertisement space according to claim 8, further comprising:

a step of handling big data including at least one of metadata indicating a detailed genre and category of media, and access data to a program guide indicating an expected value of media; and
a step of setting an external factor, a composition factor, and a content factor as the explanatory variable by combining a cloud platform capable of processing the big data at high speed, and an analysis method of deep learning that improves accuracy by self-learning using various variables, and predicting an audience rating taking into account all factors that are able to affect the audience rating.

10. The method of optimizing an advertisement space according to claim 8 or 9, further comprising:

a first input step of receiving an input of first commercial space draft data including information of at least one of a reference past audience rating and a buying cost;
a second input step of being connected to the system for high-advanced rating estimate to receive an input of second commercial space draft data including information of at least one of a predicted audience rating and a real-time audience rating; and
a data processing step of generating and outputting target actual optimization data by using a reallocation program, based on the first commercial space draft data received at the first input step and the second commercial space draft data received at the second input step,
wherein the data processing step includes evaluating a difference between the first commercial space draft data and the second commercial space draft data for each advertisement space by using the reallocation program, reallocating arrangement of a material for the advertisement space based on third commercial space draft data obtained as a result of the difference, and outputting target actual optimization data indicating a specification of the reallocated material for each advertisement space, and
the method of optimizing an advertisement space further comprises a step of receiving an input of the target actual optimization data output at the data processing step, and outputting the target actual optimization data.

11. The method of optimizing an advertisement space according to claim 10, further comprising a step of directly receiving the specification of the reallocated material for each advertisement space from a target actual optimization system, and broadcasting an advertisement for which each space material is adapted to each corresponding advertisement space based on the specification of the reallocated material for each advertisement space.

FIG. 1

FIG. 2

DECISION TREE                                    RANDOM FOREST

FIG. 3

| AUDIENCE RATING SURVEY DATA | ELECTRONIC PROGRAM GUIDE DATA | PROGRAM METADATA | OPEN SOURCE DATA | ... |

. . .

101-11

EXPLANATORY VARIABLE DATA

STORE DATA →

101-12

MEDIA INFORMATION TO BE PREDICTED

RANDOM FOREST LEARNER
(OR DEEP LEARNING, etc.)

PREDICTED AUDIENCE RATING

FIG. 4

A                                                                    B

CONVENTIONAL MULTIPLE REGRESSION ANALYSIS                RANDOM FOREST

HIGH PREDICTION VALUE IS NOT
CALCULATED DUE TO UNCLEAR
CAUSE OF HIT BECAUSE OF
NO PROGRAM INFORMATION

PREDICTION VALUE
REFLECTING HIT IS
POSSIBLE BECAUSE
OF PROGRAM
INFORMATION.

$y = x$
STRAIGHT LINE

HIGH CORRELATION BETWEEN
MEASURED VALUE AND PREDICTION
VALUE BECAUSE OF $Y = x$

PREDICTION VALUE                                         PREDICTION VALUE

CORRELATION COEFFICIENT: A < B
MEAN SQUARE ERROR: A > B

* PLOTS ARE DISPLAYED WITH OPACITY OF 10% TAKING INTO ACCOUNT
MANY DATA POINTS.  IT BECOMES OPAQUE WHEN 10 PLOTS OVERLAP.

FIG. 5

FIG. 6

FIG. 7

| "CORE" + "TAOS" TIME SERIES FLOW CHART |
| --- |

BROADCASTING STATION A: CASE OF EFFICIENTLY
SPECIFYING EITHER F1 TARGET MATERIAL OR M1 TARGET
MATERIAL IN COMMERCIAL SPACE OF 21:00 SB 15 SECONDS

| BROADCASTING STATION A | | CLIENT | | | | | AUDIENCE RATING SURVEY COMPANY | AUDIENCE RATING SURVEY COMPANY |

MATERIAL SPECIFICATION
F1 OR M1

MORE THAN
2 MINUTES BEFORE

| 21:00 SB 15 SECONDS | SPECIFY | MATERIAL SPECIFICATION = M1 | SPECIFY | F1 10% | COMPARE | M1 15% | AVERAGE OVER 4 WEEKS |

1 MINUTE BEFORE

| 21:00 SB 15 SECONDS | REPLACE | MATERIAL SPECIFICATION = F1 | SPECIFY | F1 15% | COMPARE | M1 5% | 1-MINUTE-BEFORE DATA |

BROADCAST
PROGRESS SYSTEM

BROADCASTING
STATION A

CORE  ~103

OA DAY

BROADCAST TRANSMISSION
EQUIPMENT

TIME SERIES

FIG. 8

<div align="center">

**INTERNATIONAL SEARCH REPORT**

</div>

| | International application No. |
|---|---|
| | PCT/JP2018/000215 |

| A. CLASSIFICATION OF SUBJECT MATTER |
|---|
| Int.Cl. G06Q30/02(2012.01)i, H04N17/00(2006.01)i, H04N21/262(2011.01)i |
| According to International Patent Classification (IPC) or to both national classification and IPC |

| B. FIELDS SEARCHED |
|---|
| Minimum documentation searched (classification system followed by classification symbols)<br>Int.Cl. G06Q30/02, H04N17/00, H04N21/262 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2012-39498 A (KDDI CORPORATION) 23 February 2012, paragraphs [0070]-[0071], [0074], [0078] (Family: none) | 1-3, 7-8<br>4, 9<br>5-6, 10-11 |
| Y<br>A | WO 2016/199549 A1 (SONY CORP.) 15 December 2016, paragraphs [0081]-[0082] & TW 201713131 A, paragraphs [0138]-[0139] | 4, 9<br>5-6, 10-11 |
| A | JP 2001-352308 A (DENTSU INC.) 21 December 2001, entire text, all drawings (Family: none) | 1-11 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 April 2018 (05.04.2018) | 17 April 2018 (17.04.2018) |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |
|---|---|

Form PCT/ISA/210 (second sheet) (January 2015)

## REFERENCES CITED IN THE DESCRIPTION

**Patent documents cited in the description**

- JP 2017002006 A